Europäisches Patentamt

European Patent Office

Office européen des brevets

(11) Veröffentlichungsnummer: **0 412 931 A1**

(12) **EUROPÄISCHE PATENTANMELDUNG**

(21) Anmeldenummer: 90810537.2

(22) Anmeldetag: 12.07.90

(51) Int. Cl.5: **C04B 38/00**, B01D 39/20, B28B 1/00, B28B 7/34, F01N 3/02, B26D 7/10, B23P 25/00

(30) Priorität: 08.08.89 CH 2925/89

(43) Veröffentlichungstag der Anmeldung:
13.02.91 Patentblatt 91/07

(84) Benannte Vertragsstaaten:
AT BE CH DE DK ES FR GB GR IT LI LU NL SE

(71) Anmelder: ALUSUISSE-LONZA SERVICES AG
Feldeggstrasse 4
CH-8034 Zürich(CH)

(72) Erfinder: Gabathuler, Jean-Pierre
Friedhofweg 2D
CH-8226 Schleitheim(CH)
Erfinder: Eckert, Karl-Ludwig
Plattenweg 32
CH-8200 Schaffhausen(CH)
Erfinder: Käser, Peter
Feldstrasse 45
CH-8200 Schaffhausen(CH)
Erfinder: Maurer, Albert
Egelseeweg 4
CH-8240 Thayngen(CH)
Erfinder: Fischer, Anton
Stimmerstrasse 76
CH-8200 Schaffhausen(CH)

(54) Verfahren zur Herstellung eines keramischen Schaumkörpers.

(57) Das Verfahren zur Herstellung eines offenporigen Schaumkörpers (10) mit einer dreidimensionalen, keramischen Netzstruktur (24), insbesondere als Filter für die Heissgasbehandlung oder als Katalysatorträger, geht von einem weichen offenporigen Kunststoff-Schaumblock (36) aus. Dieser wird wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt.

Der die vorgegebenen Aussenmasse aufweisende Kunststoff-Schaumblock (36, 28, 38, 44, 46) wird abgekühlt und zur Ausbildung eines Z-Flussfilters mit längs laufenden Strömungskanälen (14, 20, 32, 40, 42) von hoher Präzision mechanisch bearbeitet.

Fig. 1

# VERFAHREN ZUR HERSTELLUNG EINES KERAMISCHEN SCHAUMKÖRPERS

Die Erfindung bezieht sich auf ein Verfahren zur Herstellung eines offenporigen Schaumkörpers mit einer dreidimensionalen, keramischen Netzstruktur, insbesondere als Filter für die Heissgasbehandlung oder als Katalysatorträger, ausgehend von einem weichen, offenporigen Kunststoff-Schaumblock, welcher wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt wird.

Bei bekannten Heissgas- bzw. Katalysebehandlungen hat es sich als vorteilhaft erwiesen, Schaumkeramiken in Form von zylindrischen, stabil ausgebildeten Blöcken herzustellen. Solche Blöcke werden durch in bezug auf die Bewegungsrichtung des Gases wechselseitig vorne und hinten offene Bohrungen mit einer hohen Querschnittsfläche versehen, die eine ausreichende Durchströmbarkeit der Schaumkeramik sicherstellt.

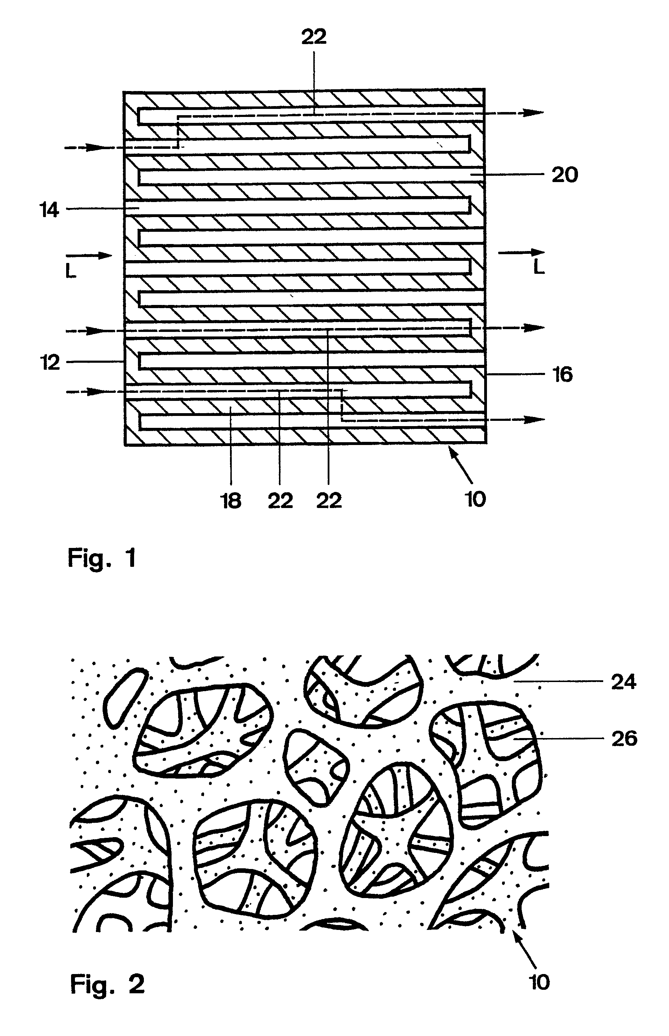

Das Prinzip der Heissgasfiltration bzw. Katalyse mit einer offenporigen Schaumkeramik geht aus Fig. 1 hervor, welche in bezug auf die Vorrichtung den Stand der Technik darstellt. Das in Längsrichtung durch den keramischen Schaumkörper 10 fliessende Gas, durch Pfeile L dargestellt, tritt auf der Eingangs-Stirnseite 12 in längslaufende Strömungskanäle 14 ein, welche in Richtung der Ausgangs-Stirnseite 16 des keramischen Schaumkörpers 10 verschlossen sind.

Das in den Strömungskanälen 14 aufgebaute Druckpotential bewirkt, dass das Gas durch die offenporigen Zwischenwände 18 des keramischen Schaumkörpers in benachbarte, ebenfalls längslaufende Strömungskanäle 20 übertritt, welche in Richtung der Ausgangs-Stirnseite 16 offen, in Richtung der Ein gangs-Stirnseite 12 dagegen geschlossen sind.

Anhand von punktierten Linien 22 wird der beispielsweise Weg von Gasmolekülen durch den keramischen Schaumkörper 10 gezeigt. Im weitaus überwiegenden Fall treten die Gasmoleküle von einem Strömungskanal 14 unter gesamthaft etwa vertikaler Ablenkung durch eine poröse Zwischenwand 18 in einen Strömungskanal 20, von wo sie abfliessen. Je nach dem Typ des Schaumkörpers werden beim Durchgang durch die poröse Zwischenwand 18 die Festbestandteile aus dem Gas entfernt oder eine katalytische Reaktion läuft ab.

Der Schaumkörpertyp gemäss Fig. 1 wird auch als Z-Flussfilter bezeichnet, wegen des vorwiegenden, im wesentlichen Z-förmigen Durchflusses der Gase durch die offenporige Keramikstruktur.

Ueberschreitet das Verhältnis der Länge zum Durchmesser der Strömungskanäle 14, 20 ein bestimmtes Verhältnis, beispielsweise 3 - 5, so treten mit üblichen Herstellungsverfahren für den keramischen Schaumkörper erhebliche Probleme auf. Nach üblichen Verfahren wird ein organischer Schaumstoff mit einer Keramikaufschlämmung getränkt und dann ein Sinterprozess durchgeführt, wobei der Schaumstoff ausbrennt. Je nach Ausführungsform der Schaumkeramik muss also vorerst eine entsprechende, weiche, Schaumstruktur aus organischem Material vorliegen.

Da für die Herstellung von präzisen, tiefen Bohrungen mit geringem Querschnitt übliche mechanische Bearbeitungsverfahren des weichen Kunststoffschaums nicht mehr anwendbar sind, mussten andere Herstellungswege beschritten werden.

Die japanische Offenlegungsschrift Nr. 61-222968 und die EP-A1 0192158 beschreiben ausführlich die Herstellung von organischen Schaumkörpern, welche in situ in einer Form aufgeschäumt werden. Die Nachteile dieses Verfahrens sind offensichtlich, es muss eine komplizierte Form hergestellt werden, das Verfahren ist arbeitsaufwendig und daher insgesamt teuer.

Die Erfinder haben sich die Aufgabe gestellt, ein Verfahren der eingangs genannten Art zu schaffen, welches die Anwendung von kostengünstigen Arbeitstechniken zur Erzeugung tiefer Strömungskanäle mit geringem Querschnitt ermöglicht und damit ein optimales Gleichgewicht von Druckverlust zu Wirkungsgrad ohne erhebliche Werkzeugkosten erlaubt.

Die Aufgabe wird erfindungsgemäss dadurch gelöst, dass der die notwendigen Aussenmasse aufweisende Kunststoff-Schaumblock abgekühlt und zur Ausbildung eines Z-Flussfilters mit längs laufenden Strömungskanälen von hoher Präzision mechanisch bearbeitet wird.

Die vorgegebenen Aussenmasse des Kunststoffschaums, vorzugsweise aus Polyurethan, Polyester oder Polyäther, werden durch Schneiden oder Formschäumen in einfachen Formen erreicht. Die vorzugsweise zylinderförmigen Kunststoff-Schaumkörper liegen in der Praxis meist zwischen 50 und 500 mm, vorzugsweise zwischen 90 und 320 mm, für den Durchmesser und 100 - 400 mm, vorzugsweise 150 - 340 mm, für die Höhe. Die Porosität liegt zweckmässig im Bereich von 10 -100 PPI, insbesondere 50 - 80 PPI (PPI = Poren per Inch).

Selbstverständlich können die Aussenkonturen des Kunststoff-Schaumkörpers neben der zylindrischen jede andere zweckmässige Form annehmen, z.B. diejenige eines Kegelstumpfs, Würfels, Quaders oder Pyramidenstumpfs.

Durch die mechanische Bearbeitung des abgekühlten Kunststoff-Schaumkörpers werden in an sich bekannter Weise parallel in Längsrichtung verlaufende, blinde Aussparungen ausgeformt, welche sich alternierend von einer Stirnseite bis in den Bereich der andern Stirnseite erstrecken (Fig. 1). Die Tiefe der die Strömungskanäle bildenden Aussparungen liegt vorzugsweise bei wenigstens dem fünffachen Wert von deren kleinster Querschnittsabmessung. Das blinde Ende der Aussparungen hat zweckmässig einen Abstand von der benachbarten Stirnseite, der wenigstens dem gegenseitigen Abstand der Aussparungen entspricht. Damit wird verhindert, dass ein nennenswerter Teil des Gases direkt durch die Ausgangs-Stirnseite austritt (Fig. 1).

Die längslaufenden Aussparungen können bezüglich des Querschnitts jede geometrische Form annehmen. Die Seitenwände der Aussparungen können gerade oder sich verengend bzw. ausweitend verlaufen. Der Formenvielfalt sind lediglich bearbeitungstechnisch Grenzen gesetzt. Im einfachsten Fall ist die Aussparung als Bohrung mit kreisrundem Querschnitt ausgebildet, von einem Bohrer oder Fräser erzeugt. Mit einem Fräser können jedoch auch gerade oder radial verlaufende Schlitze oder Ringnuten erzeugt werden. Der Durchmesser einer Bohrung bzw. die kleinste Querschnittsabmessung der Schlitze oder Ringnuten liegt vorzugsweise bei 5 - 50 mm, inbesondere bei 6 - 15 mm.

Die gegenseitigen Abstände zwischen den Aussparungen liegen bevorzugt im Bereich von 5 - 50 mm, vorzugsweise 6 - 15 mm. Der Abstand des blinden Endes einer Aussparung von der benachbarten Stirnseite liegt vorzugsweise bei 10 - 50 mm, insbesondere 20 - 30 mm. Mit andern Worten ist eine Aussparung 10 - 50 mm, vorzugsweise 20 - 30 mm, kürzer als die Gesamthöhe des entsprechenden Kunststoff-Schaumblocks. Sowohl die gegenseitigen Abstände zwischen den Aussparungen als auch die Abstände von deren blindem Ende zur benachbarten Stirnwand des Kunststoff-Schaumkörpers sind in der Praxis jeweils etwa gleich gross.

Nach einer ersten Variante der Erfindung wird der Kunststoff-Schaumblock auf einer sehr tiefen Temperatur, welche beispielsweise durch Fluten mit flüssigem Stickstoff oder flüssiger Luft erreicht wird, verfestigt. Der versprödete Kunststoffschaum kann darauf mit hoher Präzision mechanisch bearbeitet werden. Der mit den Aussparungen versehene Kunststoffschaum taut rasch wieder auf.

Nach einer zweiten Variante werden die Poren eines Kunststoff-Schaumblocks mit einem bei Raumtemperatur flüssigen Medium gefüllt und das Medium verfestigt. Der Kunststoffschaum kann nun, in das erstarrte Medium eingebettet, mit grosser Präzision mechanisch bearbeitet werden. Nach dem Verflüssigen des Mediums wird dieses wieder aus den Poren des Kunststoffschaums entfernt.

Bevorzugt werden nach der zweiten Variante die Poren des Kunststoffschaums vor dem Bearbeiten mit Wasser gefüllt. Darauf wird die Temperatur zur mechanischen Bearbeitung nur einige wenige °C unter den Gefrierpunkt abgesenkt. Das Eis bildet für den bei dieser Temperatur noch weichen Kunststoff eine feste Einbettung, welche problemlos mechanisch bearbeitet werden kann. Der Kunststoff weist eine saubere, mit der Eismatrix flächenbündige Trennfläche auf.

Die mechanische Bearbeitung erfolgt in an sich bekannter Weise durch Bohren, Fräsen, Sägen oder Schneiden.

Nach einer dritten Variante kann ein Kunststoff-Schaumblock aus einem spiralförmig gewickelten Band bestehen. Ein bandförmig ausgebildeter Kunststoffschaum wird vor dem Wickeln abgekühlt und an einer Bandoberfläche durch mechanische Bearbeitung Strömungskanäle ausgeformt. Das wieder erweichte Band wird spiralförmig zum Schaumblock gewickelt und kalziniert. Insbesondere bei grossformatigen Schaumkörpern wird das Band vorzugsweise vor dem Wickeln imprägniert, ein- oder mehrmals. Bei kleinformatigen Schaumkörpern kann das Imprägnieren auch nach dem Wickeln erfolgen.

Nach einer vierten Variante schliesslich wird ein grossformatiger Kunststoff-Schaumblock aus Scheiben zusammengesetzt. Der scheibenförmig ausgebildete Kunststoffschaum wird abgekühlt. Aus einer ersten Serie von Scheiben werden Löcher und/oder Schlitze in vorzugsweise regelmässigen Abständen ausgespart. Aus einer zweiten Serie von Scheiben wird alternierend ein Teil der Löcher und/oder Schlitze ausgespart, aus einer dritten Serie der restliche Teil der Löcher und/oder Schlitze.

Je nach der vorgegebenen Länge des keramischen Schaumkörpers wird eine entsprechende Anzahl der wieder erweichten Kunststoff-Schaumscheiben der ersten Serie so aufeinander gelegt, dass durchgehende Aussparungen gebildet werden. Darauf wird einends eine wieder erweichte Kunststoff-Schaumscheibe der zweiten Serie so aufgelegt, dass die aus dieser Scheibe ausgeformten Aussparungen auf Aussparungen der Scheiben der ersten Serie zu liegen kommen. Entsprechend wird auf der andern Stirnseite eine wieder erweichte Kunststoff-Schaumscheibe der dritten Serie so aufgelegt, dass die von der andern stirnseitigen Kunststoffscheibe verschlossenen Aussparungen vollflächig offen sind. Dadurch entstehen im Prinzip in Fig. 1 dargestellte Kunststoff-Schaumblöcke mit im Verhältnis zum Durchmesser sehr tiefen Aussparungen.

Da mit dieser Methode in der Praxis nur grosse Kunststoff-Schaumblöcke hergestellt werden, ist es zweckmässig, die Kunststoff-Schaumscheiben vor dem Zusammenfügen zu imprägnieren.

Als Spiralkörper oder scheibenförmig ausgebildete Kunststoff-Schaumblöcke eignen sich insbesondere zur Herstellung von Dieselrussfiltern für Lastwagen, weil hier grosse Dimensionen die Regel sind.

Die Erfindung wird, abgesehen von der auch den Stand der Technik darstellenden Figur 1, anhand der in der Zeichnung dargestellten Beispiele, welche auch Gegenstand von abhängigen Patentansprüchen sind, näher erläutert. Es zeigen schematisch:

- Fig. 2 eine stark vergrösserte Teilansicht eines Keramikschaums,
- Fig. 3 einen vergrösserten Teilschnitt durch ein stirnseitiges Ende eines keramischen Schaumkörpers,
- Fig. 4 einen bandförmig ausgebildeten Kunststoffschaum,
- Fig. 5 einen Kunststoff-Schaumblock aus einem Band gemäss Fig. 4, und
- Fig. 6 Kunststoff-Schaumscheiben zur Bildung eines Kunststoff-Schaumblocks.

Der in Fig. 2 stark vergrössert dargestellte Schaumkörper aus Keramik zeigt die dreidimensionale Netzstruktur mit einem keramischen Gerippe 24, welches offene Poren 26 bildet. Die Porenzahl pro Längeneinheit wird so gewählt, dass für die betreffende Anwendung ein optimales Gleichgewicht in bezug auf Druckverlust und Wirkungsgrad besteht. Beim Durchströmen eines verunreinigten Gases bleiben die Festkörperpartikel haften, z.B. Dieselruss.

Die keramische Schaumkörperstruktur gemäss Fig. 2 hat eine sehr grosse wirksame Oberfläche, was das keramische Gerippe 24 auch als optimalen Kalalysatorträger anbietet.

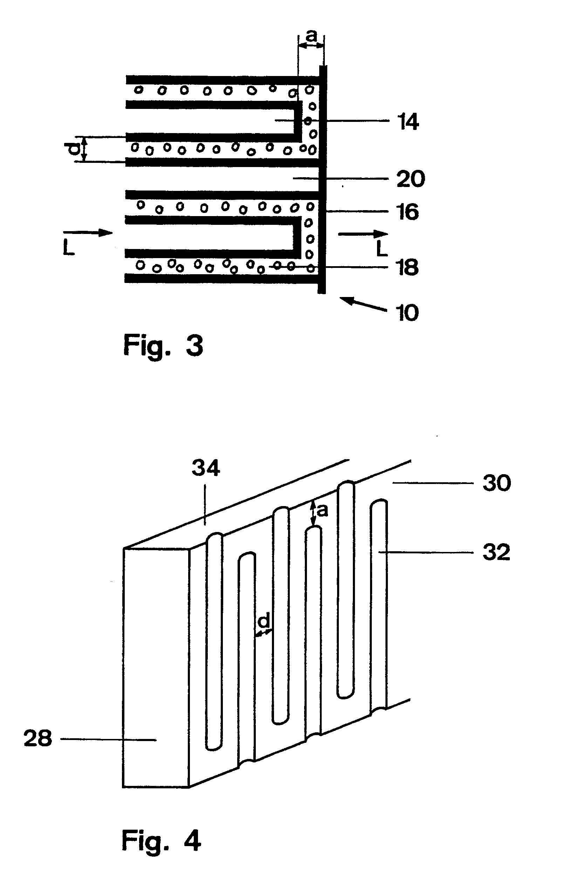

Fig. 3 zeigt den Bereich der Ausgangs-Stirnseite 16 eines Schaumkörpers 10 aus Keramik im Detail. Die allgemeine Strömungsrichtung des Gases ist mit L bezeichnet. Die Strömungskanäle 14 sind im Bereich der Ausgangs-Stirnseite verschlossen, sie enthalten noch nicht durch eine Zwischenwand 18 hindurchgetretenes Gas. Die Strömungskanäle 20 sind im Bereich der Ausgangs-Stirnseite 16 offen, sie enthalten nur durch eine Zwischenwand 18 durchgetretenes Gas.

Der Abstand d der Strömungskanäle 14 von den Strömungskanälen 20 ist kleiner als der Abstand a des blinden Endes eines Strömungskanals 14 von der Ausgangs-Stirnseite 16. Wegen des dadurch erhöhten Widerstandes wird die vom Strömungskanal 14 direkt durch die Wand der Ausgangs-Stirnseite 16 tretende Gasmenge noch kleiner, als dies den geomtrischen Flächenverhältnissen entsprechen würde.

Die nicht dargestellte Eingangs-Stirnseite verhält sich sinngemäss gleich.

Der in Fig. 4 dargestellte, bandförmig ausgebildete Kunststoffschaum 28 ist etwa 40 mm dick. An der einen Bandoberfläche 30 sind im Querschnitt halbkreisförmige Nuten 32 ausgespart, welche jeweils um den Abstand a weniger lang sind als das Kunststoffband 28 hoch. Die Nuten 32 sind alternierend nach einer schmalen Längsseite 34 offen. Sowohl der Durchmesser der Nuten 32 als auch der gegenseitige Abstand d der Nuten beträgt etwa 10 mm.

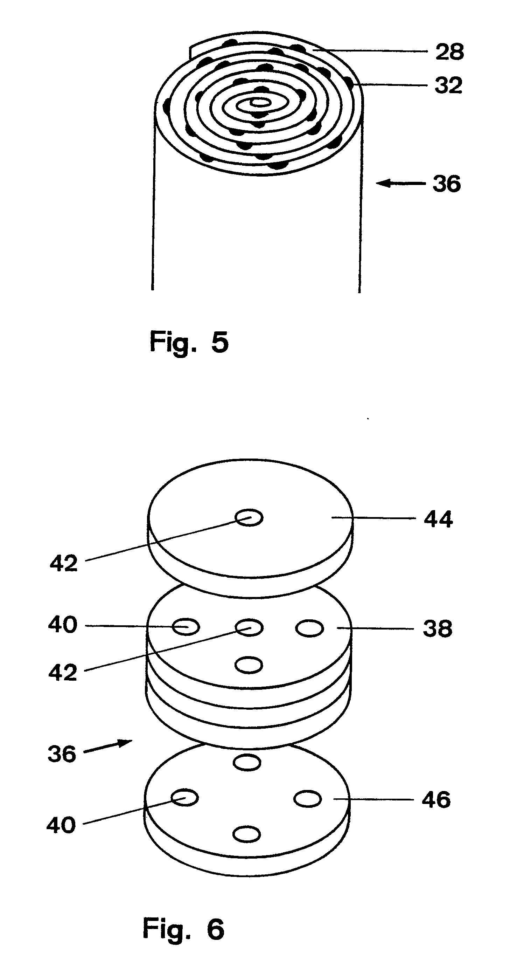

Fig. 5 zeigt ein zu einem grossformatigen Kunststoff-Schaumblock 36 spiralförmig aufgewikkeltes Kunststoff-Schaumband 28, wobei die ausgesparten Nuten 32 auf der Innenseite des Kunststoff-Schaumbandes 28 liegen. Mit der Aussenfläche der nächst inneren Spiralwicklung bilden sie einen längslaufenden Strömungskanal. Es ist nur jede zweite, einen Längskanal bildende Nut 32 sichtbar, die anderen sind auf dieser Seite verschlossen.

Funktionell entspricht der aus dem Kunststoff-Schaumblock 36 hergestellte Schaumkörper 10 aus Keramik einem homogenen, ausgeschäumten Schaumstoff mit mechanisch ausgebohrten Aussparungen.

Fig. 6 zeigt scheibenförmig ausgebildeten Kunststoffschaum, der zu einem grossformatigen Kunststoff-Schaumblock 36 zusammengesetzt wird. Einfachheitshalber sind nur wenige Bohrungen durch die Kunststoff-Schaumscheiben gezeichnet, damit das Prinzip besser erkannt werden kann. In Wirklichkeit enthalten die Scheiben eines grossformatigen Kunststoff-Schaumblocks mehrere Dutzend Bohrungen.

Mehrere Kunststoff-Schaumscheiben 38 mit einer zentralen Bohrung 40 und vier peripheren Bohrungen 42 sind so aufeinander angeordnet, dass die Bohrungen einen durchgehenden Strömungskanal bilden. Einends ist eine Kunststoff-Schaumscheibe 44 mit lediglich einer zentralen Bohrung 42, andernends eine Kunststoff-Schaumscheibe 46 mit vier peripheren Bohrungen 40 vorgesehen. Die Bohrungen der beiden endständigen Kunststoff-Schaumscheiben 44, 46 passen beim Zusammenfügen jeweils auf die entsprechenden Bohrungen der Kunststoff-Schaumscheiben 38.

Bei zusammengefügten Kunststoff-Schaumscheiben 38, 44, 46 ist eine zentrale Bohrung 42 von oben offen und unten geschlossen, vier periphere Bohrungen 40 dagegen sind von unten offen und oben geschlossen. So kann ein grossformatiger Schaumkörper aus Keramik hergestellt werden, welcher im Verhältnis zur Länge sehr dünne Strömungskanäle haben kann. Dank des erfindungsgemässen Verfahrens ist es möglich, die Kunststoff-Schaumscheiben 38, 42, 44 verhältnismässig dick auszubilden, was vor allem bei den innenliegenden Scheiben 38 wichtig ist.

Ausführungsbeispiele

1. Ein Dieselrussfilter für ein Personenauto, ein Schaumfilter aus Keramik hat eine Porosität von 70 PPI. Der Aussendurchmesser beträgt 160 mm, die Höhe 170 mm. Von der einen Stirnseite sind 21 Löcher mit einem Durchmesser von 8 mm gebohrt, von der andern Seite 16 gleiche Löcher. Die Länge der Löcher beträgt 145 mm, der Abstand zwischen den Löchern 10 mm.

2. Ein Dieselrussfilter für einen Lastwagen hat ebenfalls eine Porosität von 70 PPI. Der Schaumfilter aus Keramik hat einen Durchmesser von 295 mm und eine Höhe 330 mm. Von der einen Stirnseite sind 96 Löcher mit einem Durchmesser von 8 mm gebohrt, von der andern Seite 43 Löcher mit dem gleichen Durchmesser. Die Tiefe der Löcher beträgt 305 mm, das blinde Ende ist also 25 mm von der benachbarten Stirnseite entfernt. Der gegenseitige Abstand zwischen den Löchern beträgt 10 mm.

**Ansprüche**

1. Verfahren zur Herstellung eines offenporigen Schaumkörpers (10) mit einer dreidimensionalen, keramischen Netzstruktur (24), insbesondere als Filter für die Heissgasbehandlung oder als Katalysatorträger, ausgehend von einem weichen offenporigen Kunststoff-Schaumblock (36), welcher wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt wird,
dadurch gekennzeichnet, dass
der die vorgegebenen Aussenmasse aufweisende Kunststoff-Schaumblock (36, 28, 38, 44, 46) abgekühlt und zur Ausbildung eines Z-Flussfilters mit längslaufenden Strömungskanälen (14, 20, 32, 40, 42) von hoher Präzision mechanisch bearbeitet wird.

2. Verfahren nach Anspruch 1, dadurch gekennzeichnet, dass durch die mechanische Bearbeitung parallel in Längsrichtung (L) verlaufende, als Strömungskanäle dienende, blinde Aussparungen (14, 20, 32, 40, 42) ausgeformt werden, welche sich alternierend von einer Stirnseite (12, 16) bis in den Bereich der andern Stirnseite (16, 12) erstrecken, wobei die Tiefe der Aussparungen vorzugsweise wenigstens den fünffachen Wert von deren kleinster Querschnittabmessung und das blinde Ende der Aussparungen (14, 20) vorzugsweise wenigstens einen Abstand (a) von der benachbarten Stirnseite (12, 16) hat, der seinerseits mindestens dem gegenseitigen Abstand (d) der Aussparungen (14, 20) entspricht.

3. Verfahren nach Anspruch 1 oder 2, dadurch gekennzeich net, dass die Aussparungen (14, 20) als längslaufende Löcher, Schlitze und/oder Ringnuten, vorzugsweise Bohrungen, die Aussparungen (32) als Nuten, die Aussparungen (40, 42) als Löcher und/oder Schlitze ausgeformt werden, wobei die kleinste Querschnittabmessung 5 - 50 mm, vorzugsweise 6 - 15 mm, beträgt.

4. Verfahren nach einem der Ansprüche 1 - 3, dadurch gekennzeichnet, dass die Aussparungen (14, 20, 32, 40, 42) in einem gegenseitigen regelmässigen Abstand (d) im Bereich von 5 - 50 mm, vorzugsweise 6 - 15 mm, und deren blinde Enden einen regelmässigen Abstand (a) im Bereich von 10 - 50 mm, vorzugsweise 20 - 30 mm, von der benachbarten Stirnseite (12, 16) ausgeformt werden.

5. Verfahren nach einem der Ansprüche 1 - 4, dadurch gekennzeichnet, dass der Kunststoff-Schaumblock (36), vorzugsweise mit flüssigem Stickstoff oder flüssiger Luft, ausgefroren, der versprödete Kunststoffschaum mechanisch bearbeitet und wieder aufgetaut wird.

6. Verfahren nach einem der Ansprüche 1 - 4, dadurch gekennzeichnet, dass die Poren (26) des Kunststoff-Schaumblocks (36) mit einem flüssigen Medium gefüllt, das Medium erstarrt, der Kunststoffschaum mit dem erstarrten Medium mechanisch bearbeitet, das Medium aufgeschmolzen und aus den Poren des Kunststoffschaums entfernt wird.

7. Verfahren nach Anspruch 6, dadurch gekennzeichnet, dass die Poren (26) des Kunststoff-Schaumblocks (36) mit Wasser gefüllt und die Temperatur zur mechanischen Bearbeitung nur einige °C unter den Gefrierpunkt abgesenkt wird, wobei der Kunststoff weich bleibt.

8. Verfahren nach einem der Ansprüche 1 - 7, dadurch gekennzeichnet, dass die mechanische Bearbeitung durch Bohren, Fräsen, Sägen oder Schneiden erfolgt.

9. Verfahren nach einem der Ansprüche 1 - 8, dadurch gekennzeichnet, dass ein Kunststoff-Schaumband (28) abgekühlt, an einer Bandoberfläche (30) nach dem Wickeln Strömungskanäle bildende Nuten (32) ausgespart, aufgeschmolzen, spiralförmig zu einem Schaumkörper (36) gewickelt und kalziniert wird, wobei das Imprägnieren des Kunststoffschaums vorzugsweise vor dem Wickeln erfolgt.

10. Verfahren nach einem der Ansprüche 1 oder 3 - 8, dadurch gekennzeichnet, dass Kunststoff-Schaumscheiben (38, 44, 46) abgekühlt, aus einer ersten Serie von Scheiben (38) Löcher und/oder Schlitze (40, 42), aus einer zweiten Serie von Scheiben (44) alternierend je ein Teil der Löcher und/oder Schlitze (40, 42), aus einer dritten Serie von Scheiben (46) der andere Teil der Löcher und/oder Schlitze (40, 42) der ersten Serie von Scheiben (38) ausgespart werden, dann wenigstens eine wieder aufgeschmolzene Scheibe (38) der ersten Serie mit einer Scheibe (44) der zweiten Serie einends und einer Scheibe (46) der dritten Serie andernends so zusammengefügt werden, dass sich von einer Stirnseite (12, 16) des Schaumkörpers (36) bis in den Bereich der andern Stirnseite (16, 12) erstreckende blinde Aussparungen (14, 20) entstehen, wobei das Imprägnieren vorzugsweise vor dem Zusammenfügen der Kunststoff-Schaumscheiben (38, 44, 46) erfolgt.

**Fig. 1**

**Fig. 2**

**Fig. 3**

**Fig. 4**

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 225 402 (NIPPONDENSO)<br>* Seite 4, Zeile 50 - Seite 5, Zeile 39; Ansprüche 1, 3, 4 *<br>– –– – | 1,2,8 | C 04 B 38/00<br>B 01 D 39/20<br>B 28 B 1/00<br>B 28 B 7/34 |
| A | PATENT ABSTRACTS OF JAPAN vol. 7, no. 197 (M-239)(1342) 27 August 1983,<br>& JP-A-58 94943 (TOPPAN INSATSU) 06 Juli 1983,<br>* das ganze Dokument *<br>– –– – | 5,6,7 | F 01 N 3/02<br>B 26 D 7/10<br>B 23 P 25/00 |
| A | CHEMICAL ABSTRACTS, vol. 98, no. 16, 1983 Columbus, Ohio, USA<br>& JP-A-57179060 (JAPAN AUTOMOBILE RESEARCH INSTITUTE) Seite 301; ref. no. 131218Y<br>* Zusammenfassung *<br>– – – – – | 1,2 | |

| RECHERCHIERTE SACHGEBIETE (Int. Cl.5) |
|---|
| C 04 B<br>B 01 D<br>B 28 B<br>F 01 N<br>B 26 D<br>B 23 P |

Der vorliegende Recherchenbericht wurde für alle Patentansprüche erstellt

| Recherchenort | Abschlußdatum der Recherche | Prüfer |
|---|---|---|
| Den Haag | 06 November 90 | THEODORIDOU E. |